# FASCICULE DE BREVET EUROPEEN

(11) **EP 0 704 081 B1**
(45) Date de publication et mention de la délivrance du brevet: **05.03.1997**
(21) Numéro de dépôt: 94918921.1
(22) Date de dépôt: 14.06.1994
(51) Int. Cl.: G07B 17/00, G07B 17/04, B41J 5/44, G07F 7/08, G06K 15/00

(54) **PROCEDE DE CONTROLE D'UNE IMPRIMANTE ET CARTOUCHE POUR OBTENIR DES AFFRANCHISSEMENTS POSTAUX**
DRUCKERSTEUERVERFAHREN UND KARTUSCHE ZUM ERSTELLEN VON POSTFRANKIERUNGEN
METHOD FOR CONTROLLING A PRINTER AND CARTRIDGE FOR OBTAINING POSTAGES

(30) Priorité: 17.06.1993 FR 9307327
(43) Date de publication de la demande: 03.04.1996
(73) Titulaire: GEMPLUS CARD INTERNATIONAL, F-13420 Gemenos (FR)
(72) Inventeur: PEYRET, Patrice, F-13710 Fuveau (FR)
(74) Mandataire: Schmit, Christian Norbert Marie
(86) Numéro de dépôt international: FR9400704
(87) Numéro de publication internationale: WO9500929

(56) Documents cités:
- EP-A- 0 181 949
- EP-A- 0 322 727
- EP-A- 0 331 352
- FR-A- 2 580 844
- FR-A- 2 603 407
- FR-A- 2 657 985
- GB-A- 2 193 468

## Description

La présente invention se rapporte aux procédés qui permettent de contrôler une imprimante, plus particulièrement une imprimante ordinaire de microordinateur afin de lui faire imprimer des affranchissements postaux dans des conditions de sécurité telles que les possibilités de fraudes ne soient pas supérieures à celles des machines utilisées actuellement afin de permettre l'agrément des dispositifs mettant en oeuvre ce procédé par les services postaux.

Dès que le volume du courrier à envoyer devient un tant soit peu important, l'usage des timbres devient fastidieux et entraîne un surcoût important. C'est pourquoi la plupart des entreprises, et même les particuliers exerçant une profession libérale, utilisent généralement pour affranchir leur courrier des machines d'affranchissement de divers types. Ces machines sont achetées ou louées, soit aux services postaux, soit à des entreprises spécialisées et elles comportent un compteur plombé qui enregistre la somme des taxes postales imprimées par la machine. Ce compteur est régulièrement contrôlé par les services postaux afin d'éviter les fraudes. Ce contrôle s'effectue soit par visite à domicile d'un agent de l'administration, soit par déplacement de la machine dans les bureaux des services postaux. Dans ce dernier cas, on préfère généralement utiliser une machine comportant un module de comptage détachable, par rapport aux machines dites monobloc, pour faciliter le transport. Si certaines machines modernes ont une partie électronique relativement développée qui permet de gérer le mécanisme d'impression et celui de sélection des taxes à imprimer, le compteur proprement dit qui représente la partie sensible de l'appareil au point de vue des fraudes, est lui toujours mécanique. Cette solution présente les désagréments bien connus des systèmes mécaniques, en particulier au point de vue usure et rusticité des fonctions réalisables.

Les machines d'affranchissement présentent en outre d'autres nombreux inconvénients. Tout d'abord elles sont dédiées et ne peuvent servir qu'à ce travail. De ce fait, elles ont un coût propre important, auquel il faut ajouter l'environnement, par exemple en poste de travail, qui leur est nécessaire. En outre elles nécessitent des manipulations spécifiques elles-mêmes coûteuses en temps et en personnel.

On utilise par ailleurs de plus en plus souvent des imprimantes de bureau reliées à des microordinateurs, du type PC par exemple, qui permettent d'imprimer, non seulement du texte mais de plus en plus de graphiques et même d'images, et qui en arrivent à constituer l'élément central du travail de bureau actuel. Ces imprimantes deviennent actuellement très sophistiquées, et dans les modèles à technologie laser leur capacité d'impression n'est en pratique limitée que par la richesse du logiciel de contrôle. Dans la pratique, la connexion avec l'ordinateur se fait le plus souvent par une interface parallèle, dite Centronics, et les signaux logiques appliqués à cette interface sont l'objet d'un nombre très réduit de standards, par exemple le jeu de commande Epson ou le langage Post-script. La relation entre ces signaux et la tête d'impression sur le papier, cette dernière se contentant en fait de répartir des points sur la surface du papier selon une disposition matricielle extrêmement serrée, se fait par un système électronique qui est chargé de traduire les commandes appliquées à l'interface en autorisations d'impression de chacun de ces points. La commande directe de chaque point étant pénible à mettre en oeuvre, surtout pour des questions de rapidité, on utilise, tout au moins pour les caractères d'imprimerie standard, des circuits logiques arrangés de telle manière qu'à une commande simple corresponde un caractère de forme prédéterminée. L'ensemble de ces caractères correspond à ce qu'on appelle une police. Ces polices reprennent par exemple des caractères de l'alphabet avec des formes diverses, gras, italique, romain, etc. Le nombre des polices directement inclus dans l'électronique de l'imprimante augmente régulièrement, mais, compte tenu du coût, les fabricants préfèrent généralement utiliser des cartouches additionnelles qui sont vendues séparément et qui viennent s'enficher dans un connecteur ad-hoc de l'imprimante. On pourra se reporter à l'état de la technique constitué par le document D2 : EP-A-0 181 949 pour plus de précision sur les cartouches additionnelles. Le contenu de ces mémoires n'est bien entendu pas limité à l'alphabet et aux signes courants, tels que ceux contenus dans le jeu de caractères ASCII, mais il peut être aussi divers qu'on le veut puisqu'il est défini par le concepteur du logiciel intégré dans la cartouche. La limite ne correspond en fait qu'à la limite de résolution de l'imprimante. Pour utiliser le contenu de la cartouche, on utilise le jeu d'instructions de commande de l'imprimante qui permet de venir transférer le contenu de la cartouche, ou une partie de celui-ci si cette cartouche comprend plusieurs polices, dans la mémoire de l'imprimante. Le jeu de commande de celle-ci permet de sélectionner alors la police transférée dans cette mémoire.

Au début de l'utilisation de cette technique, chaque constructeur avait un format de cartouche particulier, tant au point de vue dimensions, connecteur, logique de commande, et même certains constructeurs avaient plusieurs formats de cartouche. Une certaine standardisation s'est imposée petit à petit et actuellement le format le plus utilisé, constituant un standard de fait, est le format PCMCIA. Dans ce format la cartouche est de la taille d'une carte de crédit, mais plus épaisse, et comprend sur l'un de ses petits côtés un connecteur comprenant un grand nombre de contacts. Ces cartouches sont en fait à l'origine destinées à servir de remplaçantes pour les disquettes ou les disques durs dans les ordinateurs portables de petite taille et elles peuvent contenir une quantité très importante de mémoires intégrées. On a ensuite élargi l'utilisation de ces cartouches en ajoutant des circuits intégrés autres que des mémoires, afin de les utiliser à diverses fonctions, par exemple pour servir de modem. Pour cela on est alors souvent amené à leur adjoindre un ou plusieurs autres connecteurs, situés généralement sur l'autre petit côté de la cartouche, et constituant par exemple une liaison série. L'extension à l'utilisation comme cartouche pour les polices d'imprimante de bureau est immédiate.

En soi, il n'y a aucune difficulté à programmer un ordinateur pour que l'imprimante qui lui est reliée imprime une marque d'affranchissement postal. Il suffit par exemple de reproduire cette marque à l'aide d'un logiciel de dessin et de prévoir des instructions pour modifier, à la demande à partir du clavier, les caractères variables tels que la date et le prix d'affranchissement. On peut pour cela, par exemple, prévoir des zones vierges à l'intérieur du dessin et venir les remplir à l'aide d'un traitement de texte très simple associé à une police d'impression correspondant aux caractères normaux utilisés par l'administration postale. L'ensemble est alors adressé à l'imprimante pour lui faire traiter l'impression par exemple, sous la forme dite "bit-map". Comme ce programme pourrait être utilisé sans aucun contrôle, sa rédaction, et encore plus son utilisation, présenteraient bien entendu un caractère essentiellement frauduleux. Il serait néanmoins extrêmement intéressant de pouvoir utiliser une imprimante de bureau pour pouvoir imprimer des marques d'affranchissement de manière réglementaire. Ceci permettrait par exemple de générer simultanément cette marque d'affranchissement et l'adresse. La lettre partirait alors du service rédacteur pour être remise directement à la poste et l'intervention du service courrier de l'entreprise serait extrêmement réduite.

On connaît du document D1 : FR-A-2 580 844 considéré comme l'état de la technique le plus proche, un procédé de contrôle d'une imprimante d'ordinateur pour obtenir des affranchissements postaux comportant un ensemble de comptabilisation amovible. Cet ensemble amovible communique avec l'ordinateur, auquel est reliée une imprimante de type quelconque.
Un tel système fait intervenir outre l'ordinateur et l'imprimante, un troisième élément qui est l'ensemble de comptabilisation.

Par conséquent ce système est encombrant, de plus il nécessite un téléchargement des marques d'affranchissement pendant lequel il y a un transfert de l'ensemble de comptabilisation à l'ordinateur et de l'ordinateur à l'imprimante.

La présente invention propose un procédé ne présentant pas ces inconvénients. Le procédé de contrôle selon l'invention est par conséquent plus rapide tout en apportant la sécurité requise.

Pour obtenir ce résultat l'invention propose un procédé de contrôle selon la revendication 1 et une cartouche selon la revendication 9.

D'autres particularités et avantages de l'invention apparaîtront clairement dans la description suivante présentée à titre d'exemple non limitatif en regard des figures annexées qui représentent :
- la figure 1, un schéma synoptique d'un système d'affranchissement selon un exemple de réalisation de l'invention;
- la figure 2, un exemple du contenu de la cartouche 104 de la figure 1;
- les figures 3 et 6, des variantes de réalisation du système de la figure 1; et
- les figures 4 et 5, des variantes de réalisation de la cartouche 104.

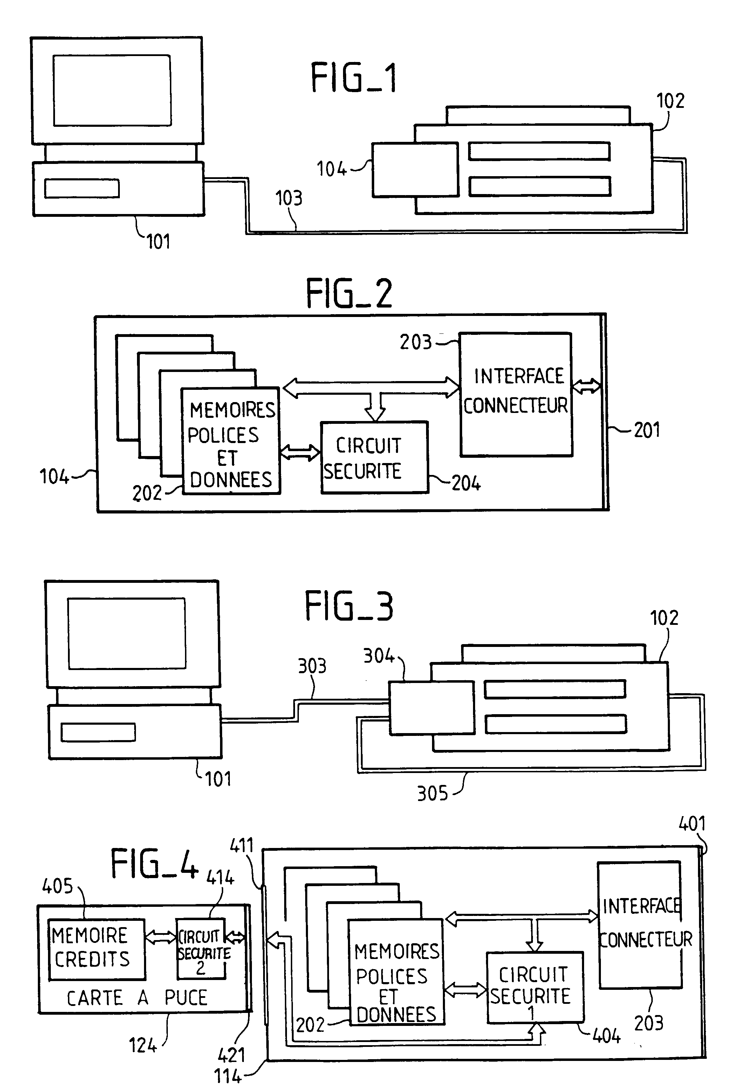

On a représenté sur la figure 1 un système pour la mise en oeuvre de l'invention, dans lequel un ordinateur 101 est relié à une imprimante 102 par l'intermédiaire d'une liaison série ou parallèle 103. Cette imprimante est munie d'une cartouche 104 qui vient prendre la place d'une cartouche de police normale, mais qui permet d'imprimer, sur commande de l'ordinateur, des marques d'affranchissement légitime. Cette cartouche est de préférence du type PCMCIA répondant au standard ISO 7816.

La cartouche 104 comprend en mémoire les marques d'affranchissement réglementaires qui sont mémorisées au format attendu par l'imprimante, c'est-à-dire par exemple un format de matrice de pixels, dit "rastérisé", ou un format de courbes de Bezier, dit "vectorisé". Comme on l'a vu plus haut, ceci ne présente en soi aucune difficulté. Pour obtenir par contre la sécurité nécessaire et éviter que l'image de ces marques, reconstituées ou détournées de manière frauduleuse, ne puisse être empruntée dans une autre cartouche librement accessible, la cartouche comprend un système de sécurité qui associe à chaque marque d'affranchissement, lorsqu'elle est appelée par l'imprimante pour être imprimée, une marque de sécurité supplémentaire originale associée à cette marque d'affranchissement et à elle seule. Cette marque de sécurité pourra alors être reconnue par les services postaux munis de systèmes de lecture adéquats et elle authentifiera la marque d'affranchissement. Cette marque de sécurité peut être formée de toutes sortes de graphiques voulus. L'exemple de réalisation préféré de l'invention propose d'utiliser comme variante la plus simple un code barres représentant une série de chiffres et/ou de caractères dont le décodage authentifiera la marque d'affranchissement. L'association entre la marque d'affranchissement et la marque de sécurité se fera selon un système cryptographique dont la clé ne sera connue que des services postaux et qui pourra être par exemple celui décrit dans la demande de brevet d'invention déposée par la demanderesse sous le n°91 11275 et publiée le 19 mars 1993 sous le n° 2 681 490.

Compte tenu du volume très réduit de la cartouche et de son utilisation dans une imprimante standard, il est tout à fait souhaitable de sécuriser son utilisation afin d'en réserver l'usage au détenteur légitime. Pour cela un mode de réalisation donné à titre d'illustration propose d'utiliser un système d'accès de sécurité tel que celui décrit dans la demande de brevet déposée par la demanderesse sous le numéro 92 00321. Dans ces conditions, lorsque la cartouche sera insérée dans l'imprimante elle ne pourra délivrer les marques d'affranchissement et les marques de sécurité correspondantes qu'après composition d'un numéro de code secret connu du seul utilisateur légitime.

La cartouche utilisera donc des circuits de type déjà connu permettant de mettre en oeuvre ces systèmes de sécurité. Elle comportera en outre les dispositifs eux aussi connus qui permettent de la mettre à l'abri des agressions physiques, consistant par exemple à l'ouvrir pour aller reconstituer le contenu des mémoires et les circuits intégrés spécialisés de protection.

La marque de sécurité comprendra donc, sous une forme cryptée, toutes les indications nécessaires à l'identification de la cartouche et donc de son possesseur, c'est-à-dire essentiellement un numéro d'identification. Elle pourra comprendre en outre des indications de date et d'heure permettant aux dispositifs de contrôle utilisés ultérieurement de procéder à un rapprochement entre la date et l'heure éventuellement imprimés sur la marque d'affranchissement, afin de déceler de manière relativement simple d'éventuelles tentatives de fraudes. Ces indications pourront être obtenues dans la cartouche dans ce cas à l'aide d'une horloge sauvegardée par une pile à longue durée, selon un procédé connu. Cette horloge pourra alors servir à limiter la durée d'utilisation de la cartouche, par exemple dans le cas d'un contrat d'affranchissement forfaitaire à la durée, ou pour obliger l'utilisateur de la cartouche à venir la faire contrôler à intervalles réguliers. Ce dernier point sera plus particulièrement utile pour le cas le plus fréquent où la cartouche comprendra un compteur incrémentant les unités de taxe au fur et à mesure de l'utilisation ; ce compteur devant être lu par les services postaux pour pouvoir facturer l'utilisateur.

Dans une imprimante ordinaire, lorsqu'une police de caractères est chargée dans la mémoire centrale de l'imprimante à partir de la cartouche, l'imprimante utilise systématiquement la police ainsi mise en mémoire jusqu'à ce qu'elle reçoive une instruction lui ordonnant de recharger une autre police. Bien entendu, dans le cas de l'utilisation de l'imprimante pour affranchir une enveloppe et si ce paiement de l'affranchissement se fait à l'unité, il est nécessaire de recharger la police à chaque impression de la marque d'affranchissement et de sa marque de sécurité associée, puisque cette dernière doit être unique. C'est alors sur la réception de cet ordre de rechargement que le compteur contenu dans la cartouche, lorsque le paiement se fait à l'unité, s'incrémentera. Pour cela le plus pratique est de prévoir dans le logiciel d'impression d'affranchissement contenu dans l'ordinateur relié à l'imprimante une instruction venant imposer ce rechargement de cartouche. Ce logiciel, qui est en lui-même très simple, sera fourni de préférence par l'administration postale avec la cartouche. La plupart des utilisateurs étant de bonne foi et n'ayant pas une connaissance importante de l'informatique, les possibilités de fraudes consistant à intervenir dans ce programme pour éliminer cette instruction seront très réduites. La dissuasion des fraudeurs éventuels se fera au niveau central de l'administration postale lors de la vérification des marques de sécurité, en constatant que l'on trouve deux ou plusieurs marques de sécurité identiques, alors qu'il ne devrait y en avoir qu'une seule.

On a représenté sur la figure 2 un schéma synoptique d'un exemple de réalisation des circuits électroniques formant une telle cartouche.

Dans le boîtier 104, terminé sur un côté par un connecteur 201, sont regroupés un ensemble de circuits de mémoire 202 mémorisant les polices et les données fixes telles que les numéros d'identification, et pouvant stocker les données variables telles que le nombre de taxes consommées depuis la mise en route de la cartouche. Ces mémoires sont reliées au connecteur 201 par un circuit d'interface 203 qui permet en particulier de décoder les ordres et les adresses en provenance de l'imprimante par le connecteur 201, selon une interface matérielle et logicielle qui dépendra de l'imprimante et sera de préférence selon la norme PCMCIA. La liaison entre ce circuit d'interface et les mémoires sera connectée en parallèle sur un circuit de sécurité 204, de type connu tel que cité plus haut, qui est en outre relié aux mémoires 202. Ce circuit détectera sur la liaison entre le circuit d'interface et les mémoires les signaux ordonnant la lecture d'une police d'affranchissement et dans ce cas mettre en oeuvre la procédure de sécurité. Si celle-ci est respectée, il calculera les éléments variables de la marque de sécurité et les adressera aux mémoires afin qu'elles soient ensuite lues à la suite de la police correspondant à la marque d'affranchissement. Si la procédure de sécurité n'est pas respectée, il bloquera la lecture des mémoires, tant directement que par l'intermédiaire du circuit d'interface.

A titre de variante, un mode de réalisation donné à titre d'exemple propose également une solution matérielle pour éviter ces problèmes, comme représenté sur la figure 3.

Comme on le voit sur cette figure, l'ordinateur 101 est relié à l'imprimante 102 non pas directement, mais par l'intermédiaire de la cartouche d'affranchissement 304. Pour cela celle-ci comporte des connecteurs destinés à être reliés à des liaisons extérieures. L'un de ces connecteurs est destiné à recevoir une liaison 303 provenant de l'ordinateur 101, du type série ou parallèle selon le cas. L'autre connecteur est destiné à recevoir une liaison 305 qui est elle-même raccordée à l'entrée normale de l'imprimante 102. Cette liaison 305 est là aussi série ou parallèle selon le connecteur d'entrée normal de l'imprimante. La cartouche 304 comprend alors des circuits qui permettent de détecter chaque demande d'impression d'une marque d'affranchissement et d'émettre ensuite sur la liaison 305 un ordre de rechargement de police de caractères à l'imprimante 102. Les signaux de commande de l'imprimante seront par ailleurs retransmis depuis la liaison 303 jusqu'à la liaison 305 de façon à ce que l'imprimante fonctionne normalement. La seule différence, par rapport à une liaison directe comme sur la figure 1, consiste donc pour les circuits supplémentaires de la cartouche 304 à interrompre la liaison provenant de l'ordinateur en lui envoyant un signal "imprimante non prête" le temps que la police se recharge, ce qui se fait très rapidement par le connecteur de liaison directe entre la cartouche et l'imprimante. Pendant ce temps d'arrêt la cartouche transmet d'abord à l'imprimante par la liaison 305 un signal de rechargement de police, ce qui entraîne l'incrémentation du compteur de la cartouche. Lorsque la police est rechargée, la cartouche retransmet à l'ordinateur un signal "imprimante prête" et laisse passer les signaux de commande depuis la liaison 303 jusqu'à la liaison 305. Dans ces conditions, pour l'ordinateur la liaison par l'intermédiaire de la cartouche 304 est tout à fait transparente, tant au point de vue logique qu'électrique. De ce fait, lorsque l'ordinateur doit commander à l'imprimante l'impression de textes normaux, l'intervention de la cartouche 304 passe totalement inaperçue, puisque celle-ci n'intervient qu'en détectant un ordre de commande d'une impression de marque d'affranchissement. Il est même tout à fait possible de prévoir dans la cartouche 304 des polices ordinaires non protégées pouvant être chargées directement au choix de l'utilisateur, sans intervention des dispositifs de protection des polices d'affranchissement.

Bien que les différentes variétés de cartouches ou d'imprimantes tendent à s'unifier et plus particulièrement à évoluer vers la norme PCMCIA, il en existe encore un grand nombre. Pour éviter alors aux services postaux de se procurer et de manipuler un grand nombre de cartouches de formats différents, un mode de réalisation donné à titre d'illustration propose, à titre de variante, de séparer au moins une partie des éléments de sécurité pour les introduire dans un boîtier standardisé pour tout le monde et pouvant être par exemple du type PCMCIA, ou encore plus simplement au format des cartes de crédit bancaires défini par la norme ISO 7816, ou éventuellement en respectant la norme ETSI GSM dite "plug-in".

On a représenté sur la figure 4 un schéma synoptique d'un exemple de réalisation de cette variante, qui comprend une cartouche 114 destinée à être connectée à l'imprimante par un connecteur 401, et une carte auxiliaire standard, dite carte à puce, 124 destinée à être reliée à la cartouche 114 par l'intermédiaire d'un connecteur 421 qui vient se connecter à un connecteur extérieur 411 de la cartouche (en fait la forme de ces connecteurs, bien connue, est tout à fait différente de celle de la figure).

Dans cette variante, le circuit de sécurité 404 contenu dans la cartouche est un circuit n°1 de type public, c'est-à-dire comportant des clés accessibles à tout le monde. Il est relié à un circuit de sécurité n° 2, 414 contenu dans la carte à puce 124, et qui est lui un circuit réservé à l'administration qui distribue la carte. Ce circuit est sécurisé par les systèmes habituels de manière à ne pas pouvoir être violé. Cette séparation en deux circuits séparés, l'un comportant la clé publique et l'autre la clé secrète, est bien connue dans la technique.

La carte à puce comprend en outre une mémoire 405, qui comporte notamment les crédits alloués par l'administration, ainsi qu'éventuellement un certain nombre d'autres données spécifiques, par exemple de durée d'utilisation.

de ce fait, seule la partie amovible correspondant à la carte à puce 124 est à gérer par l'administration postale, ce qui lui facilite grandement la tâche. Le particulier utilisateur du système doit lui se procurer directement la cartouche 114, auprès par exemple du fabricant de l'imprimante.

Comme on l'a vu plus haut, le chargement des polices entre la cartouche et la mémoire de l'imprimante est très rapide, par contraste avec le téléchargement des polices à partir de l'ordinateur, qui est quelque fois utilisé. Par contre le calcul de la marque de sécurité par le circuit spécialisé de sécurité peut demander un certain temps, compte tenu d'une part de la longueur des calculs nécessaires pour utiliser un algorithme vraiment sécurisé, et d'autre part de celle nécessaire pour former, à partir des codes ainsi obtenus, le dessin constituant la marque de sécurité proprement dite.

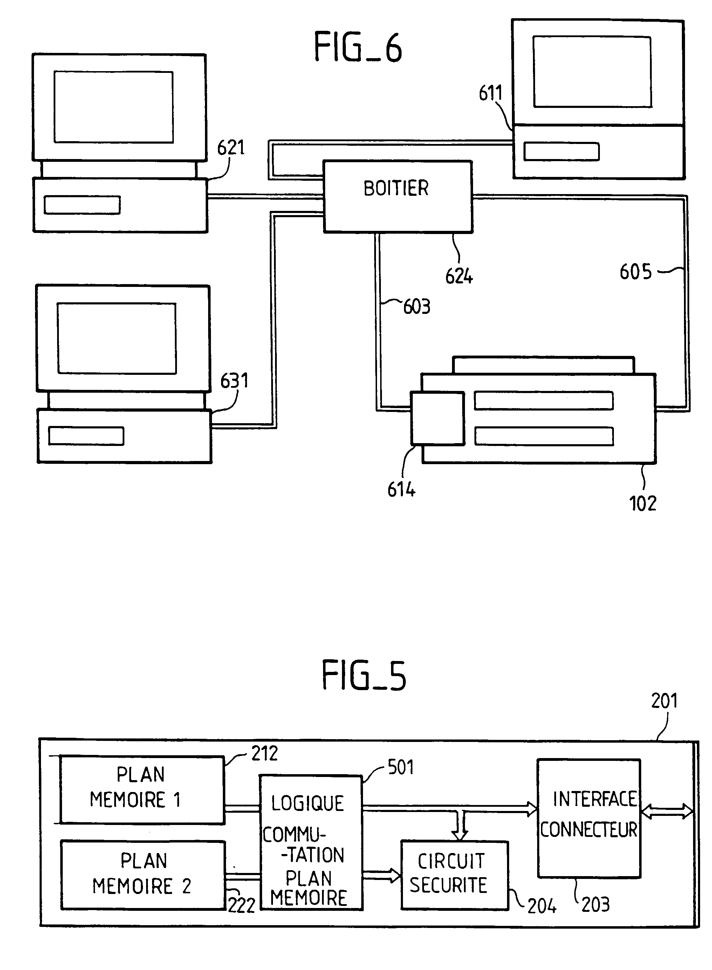

Toutefois, au fur et à mesure que les chiffres représentant le dessin de la marque de sécurité sortent du circuit spécialisé de sécurité, ceux-ci sont mis en mémoire et ils forment avec la marque d'affranchissement le dessin complet qui sera ensuite transmis à l'imprimante. Dans ces conditions rien n'empêche de préparer à l'avance la prochaine marque de sécurité et de la mémoriser dans une deuxième mémoire où elle sera prête à être appelée en cas de besoin, éventuellement dès que la marque précédente aura été imprimée. Pour cela, dans une variante d'un mode de réalisation de l'invention représentée sur la figure 5, on subdivise la mémoire de la cartouche en deux plans distincts 212 et 222 accessibles séparément. Les accès à ces plans sont gérés par une logique de commutation de plan mémoire 501 qui bascule après chaque impression d'une marque d'affranchissement et de sa marque de sécurité associée. Cette logique permet l'accès direct de l'un des plans à l'imprimante pour imprimer la marque d'affranchissement avec sa marque de sécurité, et l'accès de l'autre plan au circuit de sécurité pour charger la marque de sécurité suivante. A la fin du chargement de la police contenue dans la mémoire appelée pour un affranchissement, la logique bascule et inverse les types d'accès aux deux plans mémoires.

Cette variante est particulièrement utile lorsque, comme c'est souvent le cas des raisons de coût, on partage une même imprimante entre plusieurs ordinateurs. On pourrait envisager d'utiliser comme couramment un commutateur automatique dont la sortie serait reliée soit à l'imprimante soit à la cartouche, selon l'une des deux variantes correspondant aux figures 1 et 3, mais un mode de réalisation de l'invention propose, à titre de variante et afin par exemple de pouvoir discriminer les droits d'accès des différents ordinateurs reliés à l'imprimante, d'utiliser une structure semblable à celle représentée en figure 6.

Dans cette structure, le système d'affranchissement est divisé en deux parties, une cartouche 614 proprement dite introduite dans l'emplacement ad-hoc de l'imprimante 102, et un boîtier d'affranchissement 624 qui est extérieur à l'imprimante et aux ordinateurs 611, 621 et 631. qui se partagent cette dernière. Les circuits électroniques du système d'affranchissement seront répartis entre la cartouche 614 et le boîtier 624, lequel comportera un nombre suffisant de connecteurs pour être relié aux différents ordinateurs. Dans cette variante on utilise la structure correspondant à la variante de la figure 3, où les commandes de l'imprimante passent par l'intermédiaire du système d'affranchissement. Le boîtier 624 comporte donc une liaison 603 avec la cartouche 614 et une liaison directe 605 avec le connecteur d'entrée principale de l'imprimante 102. La répartition des circuits électroniques entre le boîtier et la cartouche pourra être variable, mais de préférence on laissera dans la cartouche les circuits de sécurité principaux et de mémorisation des données variables telles que les crédits d'utilisation, selon la variante de la figure 4. De cette manière les rapports avec l'administration postale pourront se limiter au déplacement de la cartouche 614, qui sera à priori moins encombrante que le boîtier 624.

Le chargement des droits dans la cartouche peut se faire aussi bien selon un système de pré-paiement que selon un système de post-paiement.

Dans un système de pré-paiement, on charge dans la cartouche un droit d'affranchissement, représenté par exemple sous forme d'une valeur monétaire, et au fur et à mesure de l'utilisation de la cartouche le circuit de sécurité décrémente la valeur de ce droit. Lorsque cette valeur arrive à zéro la cartouche refuse d'imprimer. On peut très bien prévoir de pouvoir consulter cette valeur à partir de l'ordinateur afin de prévoir suffisamment à l'avance de recharger les droits. Ce chargement pourra par exemple se faire en complément des droits restant dans la cartouche, de manière à ne pas être interrompu au milieu du travail.

Dans un système de post-paiement, par contre, on incrémente un compteur au fur et à mesure des utilisations successives de la cartouche et on ramène ce compteur à l'administration émettrice qui en lit la valeur puis émet une facture. Pour éviter des abus, on peut prévoir dans le système de post-paiement un plafond au-delà duquel le système se bloque ou une date limite d'utilisation.

Dans la pratique, le pré-paiement et le post-paiement correspondent surtout à des actions commerciales différentes de l'administration postale qui peut très bien, en cas de post-paiement, demander une caution qui jouera en fait le même rôle que le paiement préalable dans le pré-paiement.

La consultation par l'administration des mémoires de comptage de la cartouche ainsi que le chargement des différents droits s'effectuera selon diverses modalités de transaction sécurisée qui sont bien connues, en particulier dans le cadre des cartes à mémoire.

## Revendications

1. Procédé de contrôle d'une imprimante pour obtenir un affranchissement postal , cette imprimante (102) comportant une cartouche amovible (104) dans laquelle est mémorisée au moins une police de caractères destinée à être chargée dans l'imprimante proprement dite; ce procédé étant caractérisé en ce que l'on mémorise dans la cartouche de l'imprimante (104) au moins une marque d'affranchissement postale, que l'on associe à cette marque d'affranchissement une marque de sécurité déterminée automatiquement par un procédé sécurisé permettant d'authentifier la marque d'affranchissement, ces marques ayant la forme d'éléments graphiques traduits dans le format des caractères de l'imprimante, que l'on commande le chargement de ces marques dans l'imprimante, puis leur impression.

2. Procédé selon la revendication 1, caractérisé en ce que la marque de sécurité comprend une combinaison cryptographique de la marque d'affranchissement et d'au moins d'un numéro de série unique associé à la cartouche (104) utilisée.

3. Procédé selon la revendication 2, caractérisé en ce que la marque de sécurité comprend en outre le contenu d'un compteur sécurisé incrémenté à chaque chargement des marques dans l'imprimante.

4. Procédé selon l'une quelconque des revendications 2 et 3, caractérisé en ce que la marque de sécurité comprend en outre la date et l'heure de chargement des marques dans l'imprimante.

5. Procédé selon l'une quelconque des revendications 1 à 4, caractérisé en ce que la marque de sécurité présente la forme d'un code barres directement lisible et dont le contenu alphanumérique représente l'information de sécurité sous une forme cryptée.

6. Procédé selon l'une quelconque des revendications 1 à 5, caractérisé en ce que l'on recharge systématiquement les deux marques avant chaque impression ; la marque de sécurité étant redéterminée à chaque fois avant le rechargement de la marque d'affranchissement et d'elle-même.

7. Procédé selon la revendication 6, caractérisé en ce que l'on fait transiter les signaux de contrôle de l'imprimante (102) par l'intermédiaire de la cartouche amovible (304) pour permettre à celle-ci d'intercepter les signaux de commande de l'impression d'une marque d'affranchissement et de faire précéder ceux-ci d'un signal de commande de rechargement de la police dans l'imprimante.

8. Procédé selon la revendication 7, caractérisé en ce que ce transit des signaux de commande est transparent électriquement et logiquement pour le dispositif d'émission (101) de ces signaux de commande.

9. Cartouche pour mettre en oeuvre le procédé selon la revendication 1, la cartouche étant amovible et destinée à être chargée dans une imprimante, la cartouche caractérisée en ce qu'elle comprend une mémoire destinée à recevoir les marques d'affranchissement et de sécurité (202) ainsi que les données fixes et variables destinées à l'élaboration de la marque de sécurité, un circuit de sécurité (204) destiné à sécuriser l'accès à cette mémoire et à élaborer la marque de sécurité, un connecteur (201) de liaison à l'imprimante et une interface (203) destinée à relier ce connecteur à la mémoire et aux circuits de sécurité.

10. Cartouche selon la revendication 9, caractérisée en ce qu'elle comprend en outre au moins deux connecteurs supplémentaires destinés l'un à relier (303) la cartouche au dispositif de commande (101) de l'impression des marques, et l'autre à relier (305) cette cartouche à l'entrée normale de commande de l'imprimante (102).

11. Cartouche selon l'une quelconque des revendications 9 et 10, caractérisée en ce qu'elle est composée de deux parties, l'une (114) destinée à être connectée directement à l'imprimante et l'autre (124) destinée à être connectée à la première partie ; le circuit de sécurité étant lui-même divisé en deux parties dont l'une (404) est contenue dans la première partie de la cartouche et l'autre (414) est contenue dans la deuxième partie de la cartouche, et cette deuxième partie comprenant en outre une mémoire (405) destinée à contenir les éléments variables déterminant les différentes utilisations de la cartouche.

12. Cartouche selon la revendication 11, caractérisée en ce que la partie du circuit de sécurité (404) contenue dans la première partie de la cartouche comprend les éléments publics et que la partie (414) de ce circuit contenu dans la deuxième partie de la cartouche (124) contient les éléments secrets.

13. Cartouche selon l'une quelconque des revendications 8 à 12, caractérisée en ce que la mémoire est divisée en deux plans (212, 222) réunis par une logique de commutation (501) qui permet de calculer à l'avance la marque de sécurité correspondant à la prochaine utilisation de la cartouche.

14. Cartouche selon l'une quelconque des revendications 8 à 13, caractérisée en ce qu'elle est divisée en un premier élément (614) destiné à être inséré directement dans l'imprimante (102) et un deuxième élément (624) formant un boîtier extérieur relié au premier élément par un câble de liaison (603); ce boîtier extérieur étant prévu pour être connecté à un ensemble de plusieurs organes de commande de l'impression de marques d'affranchissement (611, 621 et 631).

## Patentansprüche

1. Verfahren zum Steuern eines Druckers, um eine Frankierung zu erhalten, wobei dieser Drucker (102) eine entnehmbare Kassette (104) enthält, in der wenigstens eine Schriftart gespeichert ist und die dazu vorgesehen ist, in den eigentlichen Drucker geladen zu werden; wobei dieses Verfahren dadurch gekennzeichnet ist, daß in der Druckerkassette (104) wenigstens ein Frankierungsstempel gespeichert ist, daß diesem Frankierungsstempel ein Sicherheitsstempel zugeordnet wird, der automatisch durch ein gesicherten Verfahrens bestimmt wird, das die Herstellung der Echtheit des Frankierungsstempels ermöglicht, wobei diese Stempel die Form von graphischen Elementen besitzen, die in das Format der Zeichen des Druckers überführt sind, und daß das Laden dieser Stempel in den Drucker und dann deren Druckvorgang gesteuert werden.

2. Verfahren nach Anspruch 1, dadurch gekennzeichnet, daß der Sicherheitsstempel eine verschlüsselte Kombination aus dem Frankierungsstempel und wenigstens einer eindeutigen Seriennummer, die der verwendeten Kassette (104) zugeordnet ist, enthält.

3. Verfahren nach Anspruch 2, dadurch gekennzeichnet, daß der Sicherheitsstempel außerdem den Inhalt eines Sicherheitszählers enthält, der bei jedem Laden der Stempel in den Drucker inkrementiert wird.

4. Verfahren nach irgendeinem der Ansprüche 2 und 3, dadurch gekennzeichnet, daß der Sicherheitsstempel außerdem das Datum und die Uhrzeit des Ladens der Stempel in den Drucker enthält.

5. Verfahren nach irgendeinem der Ansprüche 1 bis 4, dadurch gekennzeichnet, daß der Sicherheitsstempel die Form eines direkt lesbaren Strichcodes besitzt, dessen alphanumerischer Inhalt die Sicherheitsinformation in verschlüsselter Form darstellt.

6. Verfahren nach irgendeinem der Ansprüche 1 bis 5, dadurch gekennzeichnet, daß die zwei Stempel vor jedem Druck systematisch neu geladen werden; wobei der Sicherheitsstempel vor dem erneuten Laden des Frankierungsstempels und des Sicherheitsstempels selbst jedesmal neu bestimmt wird.

7. Verfahren nach Anspruch 6, dadurch gekennzeichnet, daß die Steuersignale des Druckers (102) über die entnehmbare Kassette (304) geschickt werden, um dieser zu ermöglichen, die Befehlssignale für den Druck eines Frankierungsstempels abzufangen und ihnen ein Steuersignal zum erneuten Laden der Schriftart in den Drucker voranzustellen.

8. Verfahren nach Anspruch 7, dadurch gekennzeichnet, daß dieses Schicken der Befehlssignale für die Sendevorrichtung (101) dieser Befehlssignale elektrisch und logisch durchsichtig ist.

9. Kassette zum Ausführen des Verfahrens nach Anspruch 1, wobei die Kassette entnehmbar ist und dazu vorgesehen ist, in einen Drucker geladen zu werden, wobei die Kassette dadurch gekennzeichnet ist, daß sie einen Speicher, der dazu vorgesehen ist, die Frankierungs- und Sicherheitsstempel (202) sowie die festen und veränderlichen Daten für die Ausarbeitung des Sicherheitsstempels zu empfangen, eine Sicherheitsschaltung (204), die dazu bestimmt ist, den Zugriff auf diesen Speicher zu sichern und den Sicherheitsstempel auszuarbeiten, sowie einen Verbinder (201) für die Verbindung des Druckers mit einer Schnittstelle (203) enthält, die dazu vorgesehen ist, diesen Verbinder mit dem Speicher und mit den Sicherheitsschaltungen zu verbinden.

10. Kassette nach Anspruch 9, dadurch gekennzeichnet, daß sie außerdem wenigstens zwei zusätzliche Verbinder enthält, wovon einer (303) dazu bestimmt ist, die Kassette mit der Steuervorrichtung (101) des Stempel-Drukkers zu verbinden und der andere (305) dazu bestimmt ist, diese Kassette mit dem normalen Steuereingang des Drukkers (102) zu verbinden.

11. Kassette nach irgendeinem der Ansprüche 9 und 10, dadurch gekennzeichnet, daß sie aus zwei Teilen aufgebaut ist, wovon einer (114) dazu vorgesehen ist, direkt mit dem Drucker verbunden zu werden, und der andere (124) dazu bestimmt ist, mit dem ersten Teil verbunden zu werden; wobei die Sicherheitsschaltung ihrerseits in zwei Teile unterteilt ist, wovon einer (404) im ersten Teil der Kassette enthalten ist und der andere (414) im zweiten Teil der Kassette enthalten ist, wobei dieser zweite Teil außerdem einen Speicher (405) enthält, der dazu vorgesehen ist, die veränderlichen Elemente zu enthalten, die die verschiedenen Verwendungen der Kassette bestimmen.

12. Kassette nach Anspruch 11, dadurch gekennzeichnet, daß der im ersten Teil der Kassette enthaltene Teil der Sicherheitsschaltung (404) öffentlich zugängliche Elemente enthält und der im zweiten Teil der Kassette (124) enthaltene Teil (414) dieser Schaltung die geheimen Elemente enthält.

13. Kassette nach irgendeinem der Ansprüche 8 bis 12, dadurch gekennzeichnet, daß der Speicher in zwei Ebenen (212, 222) unterteilt ist, die durch eine Umschaltlogik (501) miteinander verbunden sind, die die Berechnung im voraus des Sicherheitsstempels ermöglicht, der der nächsten Verwendung der Kassette entspricht.

14. Kassette nach irgendeinem der Ansprüche 8 bis 13, dadurch gekennzeichnet, daß sie in ein erstes Element (614), das dazu bestimmt ist, direkt in den Drucker (102) eingesetzt zu werden, und in ein zweites Element (624), das ein über ein Verbindungskabel (603) mit dem ersten Element verbundenes äußeres Gehäuse bildet, unterteilt ist; wobei dieses äußere Gehäuse dazu vorgesehen ist, an eine Gesamtheit von mehreren Steuerelementen des Druckers von Frankierungsstempeln (611, 621 und 631) angeschlossen zu werden.

## Claims

1. Method of controlling a printer to produce a post franking mark, this printer (102) having a removable cartridge (104) in which at least one character font is stored for loading into the printer itself; this method being characterised in that at least one post franking mark can be stored in the printer cartridge (104), a security mark which is automatically determined by a security-protected process which allows the franking mark to be authenticated is assigned to this post franking mark, these marks being graphic elements converted into the format of the printer characters, a command is issued to load these marks into the printer and they are printed.

2. Method as claimed in claim 1, characterised in that the security mark is a cryptographic combination of the franking mark and at least one unique serial number assigned to the cartridge (104) used.

3. Method as claimed in claim 2, characterised in that the security mark also incorporates the contents of a security-protected counter which is incremented each time the marks are loaded into the printer.

4. Method as claimed in any one of claims 2 and 3, characterised in that the security mark also incorporates the date and the time at which the marks were loaded into the printer.

5. Method as claimed in any one of claims 1 to 4, characterised in that the security mark is in the form of a directly readable bar code, the alpha-numeric content of which represents the security information in encrypted form.

6. Method as claimed in any one of claims 1 to 5, characterised in that the two marks are systematically loaded before each print-out; the security mark being redetermined every time before it and the franking mark are reloaded.

7. Method as claimed in claim 6, characterised in that the printer control signals (102) are fed via the removable cartridge (304) to allow it to intercept the print command signals of a franking mark and to allow these to be preceded by a command signal to reload the font into the printer.

8. Method as claimed in claim 7, characterised in that the transit of command signals is electrically and logically transparent for the device emitting (101) these command signals.

9. Cartridge for implementing the method as claimed in claim 1, the cartridge being removable and designed so that it can be loaded into a printer, the cartridge being characterised in that has a memory for receiving the franking and security marks (202) as well as the fixed and variable data used to work out the security mark, a security circuit (204) for protecting access to this memory and working out the security mark, a connector (201) linked to the printer and an interface (203) to link this connector to the memory and the security circuits.

10. Cartridge as claimed in claim 9, characterised in that it also has at least two supplementary connectors, one of which links (303) the cartridge to the device for controlling (101) the printing of marks whilst the other links (305) this cartridge to the standard command input of the printer (102).

11. Cartridge as claimed in any one of claims 9 and 10, characterised in that it consists of two parts, one (114) for establishing a direct connection with the printer and the other (124) designed to be connected to the first part; the security circuit itself being divided into two parts, one of which (404) is contained in the first part of the cartridge whilst the other (414) is contained in the second part of the cartridge, and this second part also has a memory (405) to hold the variable elements that determine the different uses of the cartridge.

12. Cartridge as claimed in claim 11, characterised in that the part of the security circuit (404) contained in the first part of the cartridge has public elements and the part (414) of the circuit contained in the second part of the cartridge (124) contains the secret elements.

13. Cartridge as claimed in any one of claims 8 to 12, characterised in that the memory is divided into two levels (212, 222) linked by a switching logic (501) which enables the security mark corresponding to the next usage of the cartridge to be calculated in advance.

14. Cartridge as claimed in any one of claims 8 to 13, characterised in that it is divided into a first element (614) designed to be inserted directly in the printer (102) and a second element (624) forming an external housing linked to the first element by a cable link (602); this external housing being provided for the purpose of connecting with an assembly of several command members for printing the franking marks (611, 621 and 631).
